Europäisches Patentamt

European Patent Office

Office européen des brevets

(11) Publication number: **0 246 106**
**A2**

(12) **EUROPEAN PATENT APPLICATION**

(21) Application number: **87304308.7**

(22) Date of filing: **14.05.87**

(51) Int. Cl.⁴: **B 01 D 46/10**

(30) Priority: **14.05.86 GB 8611712**
**10.09.86 GB 8621783**

(43) Date of publication of application:
**19.11.87 Bulletin 87/47**

(84) Designated Contracting States: **DE FR GB SE**

(71) Applicant: **TOXIC DECONTAMINATION HOLDINGS LIMITED**
**42 Springfield Road**
**London NW8 0QN (GB)**

(72) Inventor: **Pittman, James**
**92 Lower Lane Little Gomersal**
**Cleckheaton Yorkshire (GB)**

(74) Representative: **Harrison, Michael Robert et al**
**Urquhart-Dykes & Lord 5th Floor Tower House Merrion Way**
**Leeds, LS2 8PA (GB)**

(54) **Improvements in decontamination apparatus.**

㊿ Decontamination apparatus 10, particularly for asbestos removal, comprises a cyclone 12, a pulse jet cartridge filter 20 located downstream of the cyclone 12, and a high energy particulate air (HEPA) filter 66 located downstream of the filter 20. Asbestos which collects in filter 20 and cyclone 12 is conveyed by screw elevators 63, 64 to a discharge tube 64a, from whence it is introduced into an endless plastics tube 48 which is sealed and cut to produce sealed bags of contaminant.

FIG. 1

## Description

### IMPROVEMENTS IN DECONTAMINATION APPARATUS

This invention relates to decontamination apparatus and more particularly relates to an apparatus for the removal of asbestos from a working environment.

It has become apparent in recent years that many inhalable materials, particularly various types of asbestos, can give rise to serious health hazards. Therefore such asbestos, which has previously been installed in buildings and the like, is now being ordered to be removed for safety reasons. However, the removal of the asbestos is itself a very hazardous procedure and the removal operation must be carried out very carefully.

Most industrial countries have strict regulations dealing with the removal of asbestos, and apparatus designed to effect such removal must conform with these requirements.

According to a first aspect of the present invention there is provided apparatus for the removal of contaminant from contaminated air, said apparatus comprising at least one filter for removing the contaminant from the contaminated air, means for transporting the contaminated air to said filter or filters, means for conveying contaminant removed by the filter or filters to a discharge station, means for automatically introducing the removed contaminant at the discharge station into one or more bags, and means for sealing the removed contaminant within said bag or bags.

Preferably, the whole apparatus, and particularly the bags, are kept under negative pressure so that each contaminant containing bag is evacuated of air before it is sealed.

The contaminant will typically be asbestos but it will be appreciated that the apparatus is not so limited. However, the contaminant will be hereinafter referred to as asbestos.

In a preferred embodiment, the apparatus includes a cyclone having a tangential inlet and central oulet and a filter connected to the outlet of the cyclone. In use, air containing asbestos is drawn into the cyclone through the tangential inlet and sucked out through the central outlet, thus creating a semi-cyclonic effect to cause drop out of the larger particulate at the base of the cyclone. The particulate which collects at the base of the cyclone is conveniently conveyed to the discharge station by means of a screw elevator with which the base of the cyclone is connected by a rotary valve. The carryover air is introduced into the filter, which is preferably a high efficiency pulse jet filter containing a number of filter cartridges.

Conveniently, the filter includes means to blow compressed air intermittently through each of the filter cartridges in the reverse direction to normal air flow, in order to clean the filters. The finer particulate which collects on the outside of the filter cartridges collects at the base of the filter and is conveniently conveyed, via a rotary valve and another screw elevator, to the base of the cyclone.

The cyclone is preferably fitted with a number of aeration pads close to its base which can be fed with compressed air to prevent blocking of the cyclone.

A high efficiency particulate air filter (H.E.P.A.) is fitted to the exhaust of the filter to enable clean air to be discharged into the atmosphere.

The means for automatically introducing the contaminant into the bag at the discharge station may comprise at least one pneumatic or hydraulic ram for compressing the asbestos into slugs which are then caused to travel along the pipe beneath the cyclone towards the bag.

Preferably there are two pipes located beneath the main cyclone and the two pipes receive and compress asbestos in turn, one ram being located in each pipe.

The two pipes preferably converge to form a single discharge pipe.

Alternatively, the means for automatically introducing the contaminant into the bag comprises a screw conveyor. The asbestos is introduced into one end of the conveyor by means of a pressure valve, is conveyed along to the end of the conveyor where it falls under gravity, through a second hole in the housing, into the bag. The conveyor is inclined so that the asbestos leaves the conveyor at a height greater than the entry point.

A length of plastics material may be wrapped around the discharge pipe, the plastics material forming the successive asbestos receiving bags.

A pneumatic rubber sleeve is preferably located at the open end of the discharge pipe where the bagging occurs and is able to inflate and deflate in sequence to prevent the backflow of asbestos.

Heat sealers may be provided which seal the top of a bag when it contains a sufficient volume of asbestos and this heat sealing simultaneously forms the bottom of the next bag which can then be pulled down.

Air is pumped through the discharge tube to the bag and a pipe is preferably located interiorly of the discharge tube which sucks the air back, in order to keep the bag under vacuum.

A pneumatically adjustable table may be located beneath the end of the discharge tube so that each bag is pulled down to the level of the table. The height of the table is adjustable for different lengths of bag.

The bagging system is preferably located outside of the area of asbestos removal.

According to a second aspect of the present invention there is provided a method of removing contaminant from contaminated air, the method comprising passing the contaminated air through at least one filter, automatically collecting the removed contaminant and introducing it into one or more bags which are then sealed and exhausting the clean air into the atmosphere.

According to a third aspect of the present invention there is provided a changing unit for use with asbestos removal apparatus, the unit comprising a 'dirty' end for accommodating the removal apparatus, and a 'clean' end separated from said 'dirty' end by rooms containing washing and changing facilities.

The invention will now be described further, by way of example, with reference to the accompanying drawings, in which:-

Figure 1 is a schematic diagram of the asbestos removal apparatus;

Figure 2 shows one embodiment of means for conveying the asbestos to the discharge station.

Figure 3 shows one example of a bagging system forming part of the asbestos removal apparatus;

Figure 4 is a partially cut-away view of a changing unit for use with asbestos removal apparatus according to the present invention.

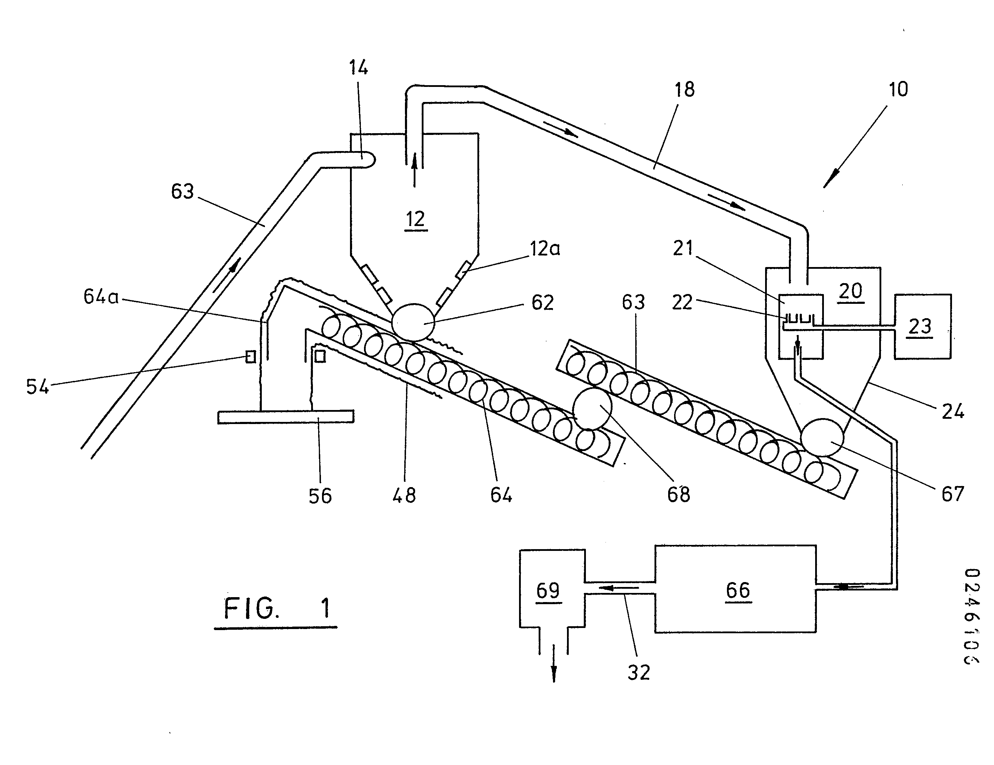

Referring to Figure 1, an operative stripping asbestos cladding from pipes loads pieces of the cladding into a granulation machine (not shown) which crushes and cuts the material into smaller pieces which can be handled by a pneumatic conveying system.

From the granulation machine, the material is pneumatically conveyed along heavy duty plastic wire reinforced hose 65, typically 100mm internal bore, at a conveying velocity of 5,000 feet per minute, into a cyclone 12 which allows the larger particles of asbestos to settle, with the finer, airborne material passing to a filter 20 to be described later.

The cyclone is a circular collection chamber with a square cyclone discharge designed to withstand a working pressure of 100" w.g. The cyclone has a tangential inlet 14 and centre outlet 18 complete with discharge thimble. This allows a semi-cyclonic effect to take place and therefore gives better separation than a standard drop-out box. The square section discharge of the cyclone is fitted with aeration pads 12a to allow adequate discharge of the collected material under normal operating circumstances. The cyclone discharges into a rotary valve 62 which has been rated at 1 ton per hour. The rotary valve is manufactured from 2.5mm rolled steel and is either bolted or fully welded, the rotary valve blades being 10mm thick high rate wear rubber to allow for any ingress of tramp material or large uncrushed pieces of product to pass effectively through. It is driven by 1.5kw reduction gear box mounted at floor level and driven through a reduction chain from the motor gear box to the rotary valve. The whole drive assembly is guarded for protection. It should be noted that the through-put rate of the rotary valve will vary dependant upon the bulk density of the material handled and the tonnage rate given above is based on the highest density of material.

From the base of the rotary valve the material falls via a small outlet chute manufactured from 3mm mild steel plate to a screw elevator 64. At the base of the screw elevator is a small equalising pressure filter to allow for equalisation of the material pressure between the rotary valve and the top of the screw elevator. The screw elevator is manufactured from 5mm mild steel tube of an all welded construction, being complete with bearings at the inlet and discharge end.

The elevator is driven by a 1.5kw geared reduction motor through chain driven reduction sprockets and the drive is adequately guarded. The discharge pipe 64a allows the collected material to be discharged into an endless polythene tube for single and/or double bagging. The screw elevator is supported throughout its length.

Air is drawn out of the central outlet 18 and is passed through a filter 20 which removes most of the remaining asbestos. Filter 20 is a high efficiency pulse jet filter having 30m$^2$ of polyester filter fabric mounted in the form of tubular cartridges 21. Cleaning of the cartridges is achieved by jets of compressed air which are released intermittently through nozzles 22 down each filter element to induce a reverse flow and shock wave for filter cleaning. The efficiency of the cartridges is generally less than 1mg per m$^3$ of air discharged. The cartridges are certificated. The filter unit is complete with a compressed air distribution manifold which feeds rapid acting solenoids and diaphragm valves which allow the compressed air to pass in sequence to the cartridges to effect adequate cleaning. The filter unit is complete with a Solid State sequential timer 23 which is sequenced to clean the filter elements in rotation at pre-set intervals, adjustable for both duration of pulse and interval between each pulse. The timer panel is suitable for an electrical supply of 220/240 volts, single phase, 50 hz electrics and is mounted in plastic box with a clear lid protected to IP55. The filter unit body is of an all welded construction, suitably stiffened to withstand 100" w.g. negative pressure and is complete with a discharge cyclone 24 for discharge of the collected material. A HEPA filter 66 is fitted to the exhaust of the filter unit so that the cleaned air is passed through this filter prior to entering the exhauster unit. The connection between the cyclone and the filter 20 is effected by the same type of flexible ductwork as the main pneumatic conveying system.

The base of the filter 20 is fitted with a small screw conveyor 63 and rotary valve 67 to the same specification as mentioned earlier. This allows the collected fines to be discharged, past the base of cyclone 12, into the polyethylene tube. For this purpose, the two screw elevators communicate with each other via a third rotary valve 68. This section of the system, being contaminated, is serviced by a negative pressure system, allowing for HEPA filter 66 on the air inlet and clean air discharge into the atmosphere. The fan has been designed to give a minimum of 0.5" negative pressure within the working environment.

From the HEPA filter 66 the clean air passes via solid 3mm thick ductwork to the exhauster set 69 contained in the clean area.

The exhauster is capable of handling 440 cfm of air at a total pressure loss of 100" w.g. It is complete with an 11kw 2-pole totally enclosed fan cooled motor and is mouted on slide rails. The exhauster and motor are mounted on a 5mm thick carrier base plate which is supported on rolled steel legs. A V-rope drive is fitted between the exhauster and the motor which is complete with a drive guard. The exhauster has a twin discharge silencer, non-air return valve and flexible inlet and outlet connections. The inlet ductwork on the negative side of the equipment is fitted with a pressure relief valve for safe running. The whole assembly will be carried by anti-vibration mountings to give reduced vibration carryover in operation. The vibration mountings have been designed to allow the equipment to be transported without locking down the mountings prior to transportation.

Compressed air for the aeration pads 12a and filter 20 is supplied via a screw compressor having a capacity of 20 cfm at 80 psi. The compressor, which is of the screw type, is driven by a 4kw 2-pole electric motor. The whole assembly is mounted in a panelled acoustically treated enclosure, under which is fitted a compressed air header tank being suitably certificated and checked. Power for the running of this equipment may be supplied by external mains or the on-board generation set. The generation set is designed to give 55kva, 45kw and this is effected via a single bearing alternator which is driven by a Perkins T 4236 radiator cooled diesel engine or similar. The front of the alternator panel is fitted with a moulded case circuit breaker and an emergency stop button. The engine stop control operates a fuel shut-down solenoid fitted to the fuel pump. The control panel for the generator is remote mounted on the main control panel described later. The generation set is skid mounted on anti-vibration mountings of a similar specification to that described on the exhauster.

The room in which the clean plant is situated is fitted with an acoustically treated inlet grill and the fan for cooling the generator and other process equipment discharges via a further acoustically treated louvre. The whole of the clean room is treated to reduce emitted noise. The generator is supplied via an external diesel tank.

The whole system is supplied with an operating consul for mounting either inside the clean or dirty room. A switch isolates the control panel and allow selection of either generated power or external electricity.

Generator control equipment includes a volt meter and selection switch, three ammeters, frequency meter, circuit breaker, key start, battery charge ammeter, oil pressure gauge, water temperature gauge, fuel level gauge, engine protection against low oil and high water temperature with warning lights and engine pre-heat button. The console is fitted with all necessary contactors and overloads to start the equipment mentioned above.

The equipment is started in rotation to minimise the loading of the generation equipment, each screw conveyor and rotary valve is fitted with its own stop/start equipment, along with stop/start equipment for the negative pressure and compressor. The console is also fitted with gauges which give indications of the negative pressure inside the dirty air unit, condition of the HEPA filters on the negative pressure equipment, the pressure drop across the filter 20, the pressure drop across the HEPA filter and also the working pressure of the exhauster. The control equipment is fitted with earth strip linkage gear. Fed from the console is a 24 volt transformer for auxillary hand lights, all lights within the working environment are 110 volts as are the auxillary plug sockets. The inside of the clean and dirty areas are lined to give, as far as possible, crack and crevice free operation and ease of decontamination should it be required. A vacuum point linked to the main exhaust system is fitted to allow for cleaning of spillage should this occur.

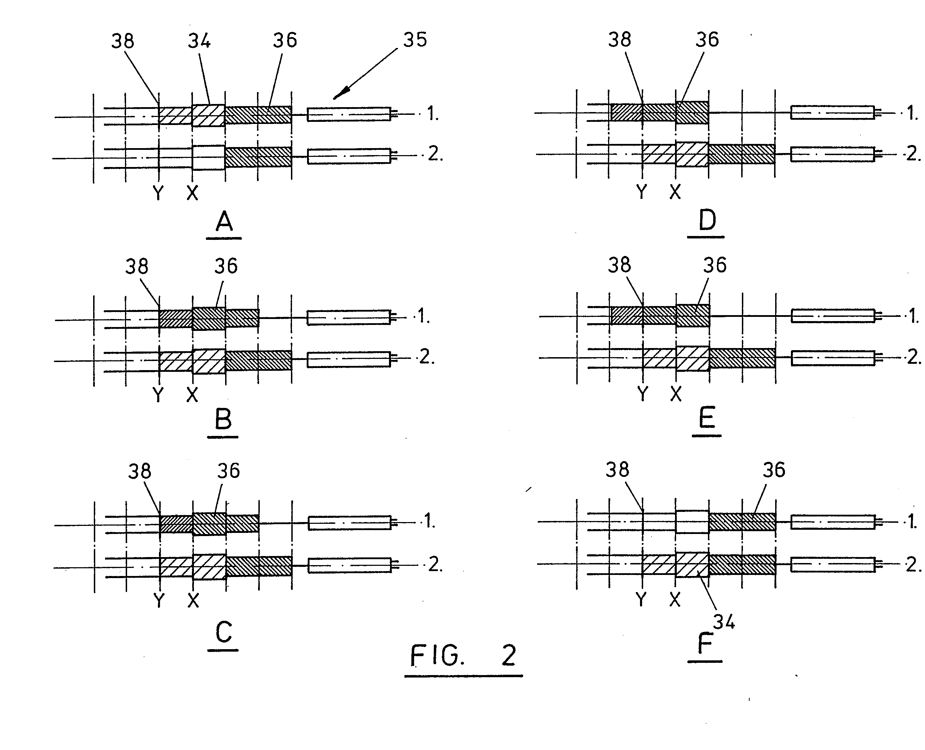

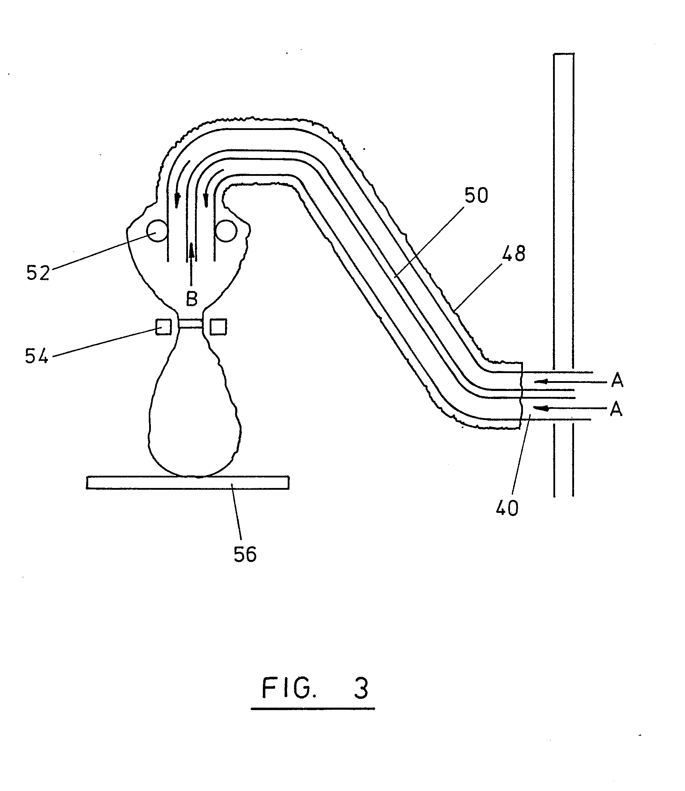

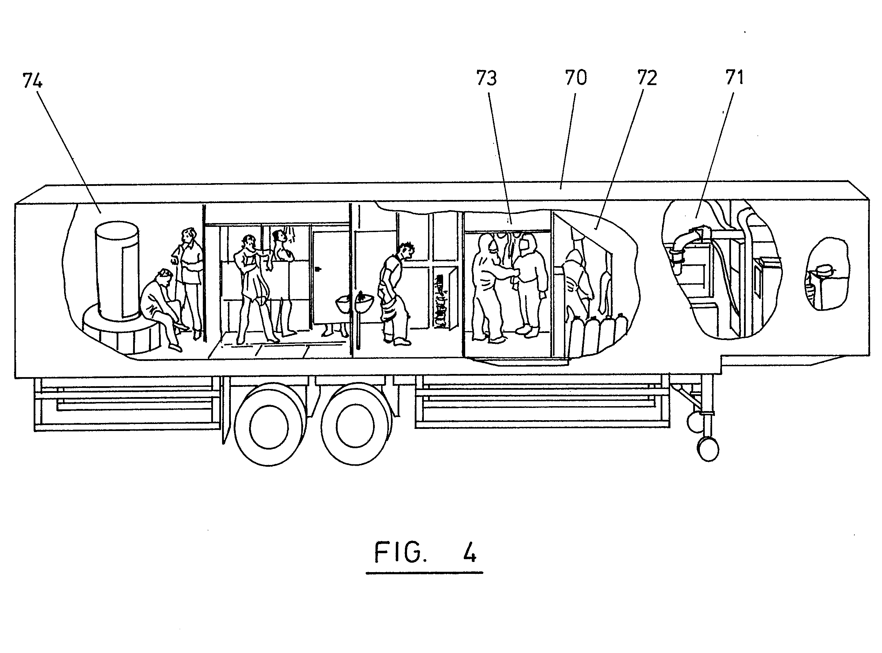

Referring now to Figures 2 and 3, a method is disclosed by which the asbestos which has been collected at the base of cyclone 12 and filter 20 can be compressed into "slugs" and sealed within bags. The asbestos is allowed to fall into a small receiving chamber 34 located in a pneumatic ramming pipe 35. There are two such pneumatic ramming pipes running parallel to one another and they operate in sequence, i.e. 180° out of phase with one another. Referring to Figure 4 the operation of the ramming pipes is as follows:

In illustration A, the chamber in pipe 1 is filled with asbestos and a slide gate 38 is closed. In illustration B the ram 36 compresses the asbestos material into a "slug" to point X. The asbestos compresses to approximately half its original volume. In illustration C, with the ram at X, the slide gate 38 opens. In illustration D the ram pushes forward to point Y pushing the slug to the other side of the slide gate. In illustration E, ram 36 goes into its return mode and as it leaves point Y, slide gate 38 closes holding the slug in position. In illustration F the ram has returned to its start position. Exactly the same procedure as described above now occurs in pipe 2. Each slug is drawn along the ramming pipes by the pressure of the next slug being pushed through the slide gate. The two ramming pipes 35 converge into a discharge pipe 40 which leads out of the asbestos removal area. A compressor 42 drives the rams and also cleans filter 20.

An alternative arrangement is shown in Figure 1 where the screw conveyors 64 and 63 are used to transport the asbestos from the bottom of the cyclone 12 and filter 20 to the bag. Loose asbestos is introduced into the conveyor through rotary valves 67, 68 and 62 and is conveyed towards the bag. The plastic sleeve 48 which forms successive bags is wrapped around the housing of conveyor 64 as shown in Figure 1.

Referring to Figure 3, a suction pipe 50 is located in the interior of the discharge pipe to remove air from the asbestos containing bags. A pneumatic rubber sleeve 52 is positioned at the end of the discharge pipe and is able to inflate and deflate in sequence in order to prevent the backflow of asbestos. The pneumatic rubber sleeve is inflated and deflated by means of the compressor 42 and a pneumatic pipe (not shown). Heat sealers 54 seal the top of an asbestos containing bag and simultaneously form the bottom of the next. A pneumatically adjustable table 56 is located beneath the heat sealers and sealed bags of asbestos collect thereon.

In operation of the device, an operator pulls down the polythene sheeting until it more or less touches the table 56. The bottom of the sheeting will already have been sealed to form the bottom of a bag. The sleeve 52 then inflates to form a seal while asbestos enters the bag. This prevents asbestos travelling back between the discharge pipe 40 and polythene sleeve 48. The compressor 42 pumps air through the discharge pipe in the direction of arrow A and air is also withdrawn in the direction of arrow B through suction pipe 50, i.e. the bag is kept under negative pressure. Any asbestos sucked back along the suction pipe 50 is diverted back to the main cyclone by means of a bleed-off pipe (not shown). An amount of asbestos travels along discharge pipe 40 and collects in the bag. The negative pressure prevents asbestos travelling back through the discharge pipe and also evacuates air from the bag. When filled, the top of the bag is then sealed by heat sealers 54 and the bag, the interior of which is under vacuum, falls onto the table 56. The sleeve 52, which is in the form of an annular collar, then deflates allowing polythene sheeting 48 to be pulled down to form the next bag. The pre-set cycle is then repeated.

Where regulations require the double bagging of asbestos, the sealed bags can be manually put onto a roller conveyor and they would then fall into a larger bag. When a suitable number of bags have fallen into the larger bag, this would be sealed in much the same way as described above.

It is envisaged that some of the negative pressure will be able to be diverted from the discharge pipe, perhaps by means of a Y section attachment, to provide a vacuum system to effectively "sweep up" any asbestos in case of asbestos leaks.

It is intended that the apparatus is used in conjunction with a mobile decontamination unit which would typically comprise an asbestos removal (working) area, a decontamination cell and a clean cell. The bagging apparatus would be located exteriorly of the working area.

A distinct advantage of the invention is that it provides a much safer and cleaner method of bagging asbestos and furthermore it allows an asbestos removal operation to be conducted much more efficiently.

Fig. 4 shows a changing unit which may be used in conjunction with asbestos removal apparatus according to the present invention. It is contained within a trailer 70, one end of which accommodates the asbestos removal apparatus 71. The bagging takes place in a bagging room 72, and the adjacent room 73 is where the operators remove their protective clothing and breathing apparatus. Toilet and shower facilities are provided towards the rear of the trailer, the operators finally emerging at the clean end 74.

**Claims**

1. Apparatus for the removal of contaminant from contaminated air, said apparatus being characterised in the combination of at least one filter for removing the contaminant from the contaminated air, means for transporting the contaminated air to said filter or filters, means for conveying contaminant removed by the filter or filters to a discharge station, means for automatically introducing the removed contaminant at the discharge station into one or more bags, and means for sealing the removed contaminant within said bag or bags.

2. Apparatus according to claim 1 further characterised in that there is provided a cyclone for removing relatively large particles of contaminant and a first filter, located downstream of said cyclone for removing relatively finer particles of contaminant.

3. Apparatus according to claim 2 further characterised in that there is also provided, downstream of said first filter, a second filter to remove any residual contaminant.

4. Apparatus according to claim 2 further characterised in that the first filter includes means for effecting a pulsed intermittent reverse flow of compressed air to clean the filter.

5. Apparatus according to any of the preceding claims, further characterised in that the means for automatically introducing the removed contaminant into one or more bags comprises a discharge tube at said discharge station, and an endless tube of plastics material fitted over the open end of said discharge tube.

6. Apparatus according to claim 5 further characterised in that the bag or bags are sealed automatically.

7. Apparatus according to claims 5 or 6, further characterised in that the bags are retained under negative pressure whilst they are being filled.

8. Apparatus according to any of the preceding claims further characterised in that the contaminant is removed from said filter or filters by means of at least one screw elevator.

9. Apparatus according to any one of the preceding claims further characterised in that the whole of the apparatus is operated under negative pressure.

10. A method of removing contaminant from contaminated air, the method being characterised in the steps of:-
passing the contaminated air through at least one filter;
automatically collecting the removed contaminant and introducing it into one or more bags which are then sealed automatically; and
exhausting clean air into the atmosphere.

FIG. 1

FIG. 2

0246106

0246106

FIG.  3

74  73  70  72  71

FIG. 4

0246106